# FASCICULE DE BREVET EUROPEEN

(11) **EP 3 529 582 B1**
(45) Date de publication et mention de la délivrance du brevet: **15.07.2020**
(21) Numéro de dépôt: 17793894.1
(22) Date de dépôt: 23.10.2017
(51) Int. Cl.: G01M 13/027, G01N 3/20

(54) **APPAREIL POUR TESTER UN ARBRE ET/OU UNE PIECE MECANIQUE MONTEE SUR L'ARBRE ET UTILISATION D'UN TEL APPAREIL**
VORRICHTUNG ZUM TESTEN EINER WELLE UND/ODER EINES MECHANISCHEN, AN DER WELLE BEFESTIGTEN TEILS UND VERWENDUNG SOLCH EINER VORRICHTUNG
APPARATUS FOR TESTING A SHAFT AND/OR A MECHANICAL PART MOUNTED ON THE SHAFT AND USE OF SUCH AN APPARATUS

(30) Priorité: 21.10.2016 FR 1660234
(43) Date de publication de la demande: 28.08.2019
(73) Titulaire: MG-Valdunes, 59125 Trith Saint Leger (FR); Université de Lille, 59800 Lille (FR)
(72) Inventeur: BRUNEL, Florent, 62960 Ligny-les-Aire (FR); DUFRÉNOY, Philippe, 59152 Chereng (FR); DEMILLY, François, 59130 Lambersart (FR)
(74) Mandataire: Lavoix
(86) Numéro de dépôt international: PCT/EP2017/077000
(87) Numéro de publication internationale: WO 2018/073451

(56) Documents cités:
- EP-A1- 0 112 400
- EP-A1- 2 927 660
- DE-A1-102010 027 897
- DE-A1-102014 106 086
- FR-A1- 2 365 117
- JP-A- H0 452 545
- US-A- 4 862 738

## Description

La présente invention concerne le domaine des appareils pour tester un arbre et/ou une pièce mécanique montée sur l'arbre, par exemple une roue montée sur l'arbre.

Des bogies de véhicule ferroviaire sont munis d'essieux, chaque essieu comprenant deux roues coaxiales portées par un arbre, chaque roue étant prévue pour rouler sur un rail respectif d'une voie ferrée. La caisse du véhicule ferroviaire est en appui sur l'arbre qui est lui-même en appui sur les roues.

Du fait des distances entre, d'une part, les points d'appui de la caisse sur l'arbre, et, d'autre part, les roues, l'arbre est fortement sollicité en flexion. En outre, du fait de la rotation de l'arbre lorsque le bogie roule le long de la voie ferrée, l'arbre subit des cycles répétés de flexion/déflexion ce qui entraîne à terme une fatigue de l'arbre.

Pour des raisons de sécurité, lors de la conception d'un arbre d'essieu de véhicule ferroviaire, il est nécessaire de procéder à des tests de flexion, et en particulier à des tests de fatigue en flexion.

EP 0 112 400 A1, US 4 862 738 A, JP H04 52545 A et FR 2 365 117 A1 décrivent de tels appareils de test.

Il est aussi possible de tester une roue de véhicule ferroviaire emmanchée sur l'arbre.

Un des buts de l'invention est de proposer un appareil pour tester un arbre et/ou une mécanique montée sur l'arbre, qui soit simple à mettre en œuvre, fiable et qui permette de réaliser des tests représentatifs des conditions réelles d'utilisation.

A cet effet, l'invention propose un appareil pour tester un arbre et/ou une pièce mécanique montée sur l'arbre selon la revendication 1

L'appareil peut comprendre une ou plusieurs des caractéristiques optionnelles des revendications 2 à 9.

L'invention concerne aussi l'utilisation d'un appareil tel que défini ci-dessus selon la revendication 10.

L'utilisation peut être selon la revendication 11.

L'invention et ses avantages seront mieux compris à la lecture de la description qui va suivre, donnée uniquement à titre d'exemple, et faite en référence aux dessins annexés, sur lesquels :
- les Figures 1 et 2 sont des vues de côté et de face d'un appareil pour tester un arbre en flexion et/ou une pièce mécanique montée sur l'arbre;
- les Figures 3 et 4 sont des vues de côté et de face d'un autre appareil pour tester en flexion un arbre et/ou une pièce mécanique montée sur l'arbre; et
- les Figures 5 à 8 sont des schémas cinématiques en perspective représentatifs d'appareils pour tester un arbre en flexion et/ou une pièce mécanique montée sur l'arbre.

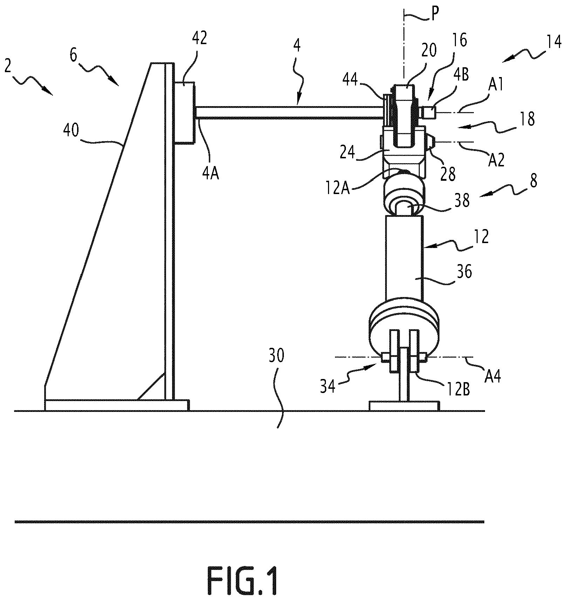

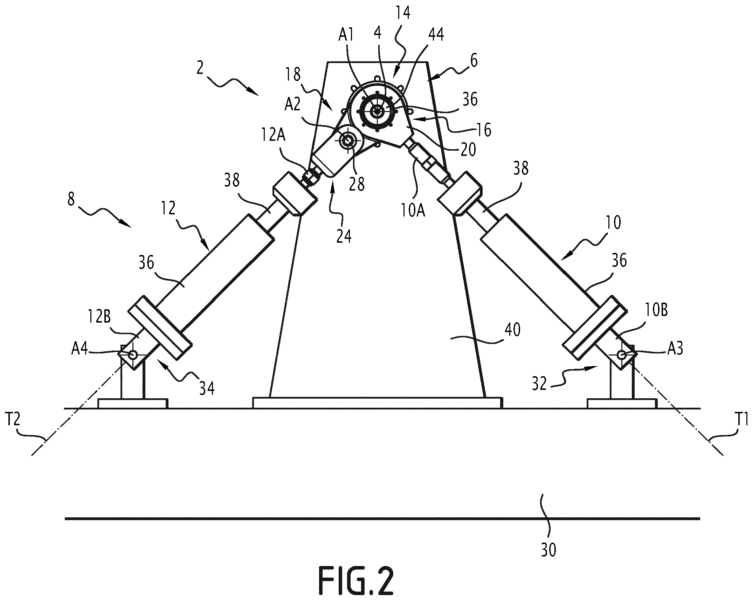

L'appareil 2 représenté sur les Figures 1 et 2 est adapté pour réaliser un test en flexion d'un arbre, notamment un arbre d'essieu, et en particulier un arbre d'essieu de bogie de véhicule ferroviaire.

Sur les Figures 1 et 2, un arbre 4 à tester est installé sur l'appareil 2 et prêt à être testé en flexion. L'arbre 4 est représenté au repos, i.e. non sollicité en flexion.

Dans la suite de la description, sauf indication contraire, les positions des axes géométriques et des points géométriques sont indiquées pour l'arbre 4 au repos.

L'appareil 2 comprend un dispositif d'immobilisation 6 pour immobiliser une première portion 4A de l'arbre 4, l'arbre 4 au repos s'étendant suivant un premier axe A1, et un dispositif de déplacement 8 pour déplacer une deuxième portion 4B de l'arbre 4 perpendiculairement au premier axe A1, de manière à solliciter l'arbre 4 en flexion.

La première portion 4A de l'arbre 4 et la deuxième portion 4B de l'arbre 4 sont espacées l'une de l'autre le long du premier axe A1 et de l'arbre 4. L'arbre 4 est sollicité en flexion entre la première portion 4A et la deuxième portion 4B de l'arbre 4. La première portion 4A et la deuxième portion 4B de l'arbre sont ici les deux portions d'extrémité opposées de l'arbre 4.

Le dispositif de déplacement 8 est configuré pour déplacer la deuxième portion 4B de l'arbre 4 dans un plan de déplacement P sensiblement perpendiculaire au premier axe A1. Sur les Figures 1 et 2, le premier axe A1 est sensiblement horizontal et le plan de déplacement P est sensiblement vertical.

Le dispositif de déplacement 8 comprend un premier vérin 10 s'étendant suivant un axe de premier vérin T1 sensiblement perpendiculaire au premier axe A1, un deuxième vérin 10 s'étendant suivant un axe de deuxième vérin T2 sensiblement perpendiculaire au premier axe A1, et un dispositif de liaison 14.

Le premier vérin 10 a deux extrémités de liaison 10A, 10B opposées. Le premier vérin 10 est propre à générer une translation rectiligne d'une extrémité de liaison 10A par rapport à l'autre 10B suivant le premier axe vérin T1.

Le deuxième vérin 12 a deux extrémités de liaison 12A, 12B opposées. Le deuxième vérin 12 est propre à générer une translation rectiligne d'une extrémité de liaison 14A par rapport à l'autre 14B suivant le deuxième axe de vérin T2.

De préférence, le premier vérin 10 et le deuxième vérin 12 possèdent chacun de préférence deux sens de travail. En d'autres termes, chacun du premier vérin 10 et du deuxième vérin 12 est configuré pour générer sélectivement un effort de traction ou un effort de compression selon son axe de vérin T1, T2, pour respectivement rapprocher ou écarter les extrémités du vérin 10, 12 l'une de l'autre.

L'axe de premier vérin T1 est orthogonal par rapport au premier axe A1. L'axe de deuxième vérin T2 est orthogonal par rapport au premier axe A1. L'axe de premier vérin T1 et l'axe de deuxième vérin T2 s'étendent suivant le plan de déplacement P. L'axe de premier vérin T1 et l'axe de deuxième vérin T2 font un angle non nul entre eux.

Dans le mode de réalisation des Figures 1 et 2, l'axe de premier vérin T1 et l'axe de deuxième vérin T2 sont sensiblement coplanaires et s'étendent dans le plan de déplacement P.

Le dispositif de liaison 14 est configuré pour être disposé entre, d'une part, le premier vérin 10 et le deuxième vérin 12, et, d'autre part, l'arbre 4, afin que le premier vérin 10 et le deuxième vérin 12 puissent solliciter l'arbre 4 perpendiculairement au premier axe A1.

Le dispositif de liaison 14 est configuré pour réaliser, entre l'arbre 4 et l'extrémité 10A du premier vérin 10 liée à l'arbre 4, une première liaison 16 interdisant une translation relative perpendiculairement au premier axe A1 et autorisant une rotation relative autour du premier axe A1.

De manière générale, une liaison rotule autorise trois rotations autour de trois axes orthogonaux entre eux se coupant en un centre de rotation et interdit toute translation. Une liaison linéaire annulaire autorise trois rotations et une seule translation suivant un seul axe de translation, en interdisant des translations perpendiculairement à cet axe translation, le centre de rotation coulissant suivant l'axe de rotation. Une liaison pivot autorise une rotation autour d'un seul axe de rotation et interdit toute translation. Une liaison pivot glissant autorise une rotation autour d'un seul axe de rotation, et autorise une seule translation suivant l'axe de rotation, en interdisant des translations perpendiculairement à l'axe de rotation.

Selon l'invention, la première liaison 16 est une liaison rotule dont le centre de rotation est situé sur le premier axe, une liaison linéaire annulaire dont l'axe de translation est le premier axe A1 et le centre de rotation est situé sur le premier axe A1, une liaison pivot dont l'axe de rotation est le premier axe A1 ou une liaison pivot glissant, dont l'axe de rotation et de translation est le premier axe A1.

Le dispositif de liaison 14 est configuré pour réaliser, entre l'arbre 4 et l'extrémité 12A du deuxième vérin liée à l'arbre 4 ou entre l'extrémité 10A du premier vérin 10 liée à l'arbre 4 par la premier liaison 16 et l'extrémité 12A du deuxième vérin 10 liée à l'arbre 4, une deuxième liaison 18 interdisant une translation relative perpendiculairement au premier axe A1 et autorisant une rotation relative autour d'un deuxième axe A2 parallèle au premier axe A1.

Dans des modes de réalisation, la deuxième liaison 18 est une liaison rotule dont le centre de rotation est situé sur le deuxième axe A2, une liaison linéaire annulaire dont l'axe de translation est le deuxième axe A2 et le centre de rotation est situé sur le deuxième axe A2, une liaison pivot dont l'axe de rotation est le deuxième axe A2, ou une liaison pivot glissant dont l'axe de rotation et de translation est le deuxième axe A2.

Tel qu'illustré sur les Figures 1 et 2, le dispositif de liaison 14 est ici configuré pour réaliser la deuxième liaison 18 entre l'extrémité 10A du premier vérin 10 liée à l'arbre 4 par la première liaison 16 et l'extrémité 12A du deuxième vérin 10 liée à l'arbre 4. En outre, le deuxième axe A2 est distinct du premier axe A1.

La première liaison 16 est une liaison rotule dont le centre de rotation O est centré sur le premier axe A1.

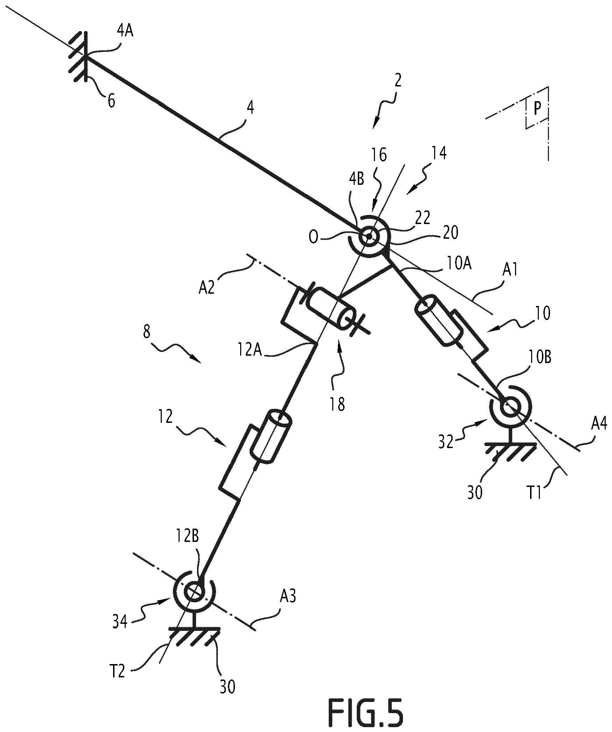

Le dispositif de liaison 14 comprend un premier embout 20 fixé rigidement à l'extrémité 10A du premier vérin 10, le premier embout 20 définissant un logement de rotule recevant à rotation une rotule 22 (Figure 5). La rotule 22 est munie d'un orifice de réception de la deuxième portion 4B de l'arbre 4, pour le montage de la rotule 22 sur l'arbre 4. La rotule 22 est immobile en translation le long de l'arbre 4.

En variante, la première liaison 16 est une liaison linéaire annulaire. Pour ce faire, la rotule 22 est montée sur l'arbre 4 en étant mobile en translation suivant le premier axe A1 par rapport à l'arbre 4. Ceci permet d'éviter l'apparition de contraintes mécaniques lors de la sollicitation de l'arbre 4 en flexion.

Dans ces variantes, la rotule peut être remplacée par un palier à roulement à rotule disposé dans l'embout, autorisant une rotation autour d'un axe de rotation primaire coïncidant avec le premier axe A1 et autorisant des rotations d'amplitude limitée autour de deux axe de rotation perpendiculaire à l'axe de rotation primaire.

La deuxième liaison 18 est une liaison pivot, le deuxième axe A2 étant distinct du premier axe A1.

Le dispositif de liaison 14 comprend un deuxième embout 24 fixé rigidement à l'extrémité 12A du deuxième vérin 10, le deuxième embout 24 étant monté pivotant sur le premier embout 20 autour du deuxième axe A2 par l'intermédiaire d'un pivot 28. L'embout 26 est par exemple un embout à chape.

L'appareil 2 comprend un bâti 30 fixe. Le dispositif d'immobilisation 6 permet d'immobiliser la première portion 4A de l'arbre 4 par rapport au bâti. Le premier vérin 10 et le deuxième vérin 12 sont chacun agencés entre le bâti 30 et le dispositif de liaison 14 pour déplacer la deuxième portion 4B de l'arbre 4 par rapport au bâti 30 perpendiculairement au premier axe A1.

Le premier vérin 10 a son extrémité de liaison 10A liée à l'arbre 4 par l'intermédiaire du dispositif de liaison 14, et son autre extrémité de liaison 10B liée au bâti 30 par l'intermédiaire d'une troisième liaison 32 autorisant une rotation relative autour d'un troisième axe A3 parallèle au premier axe A1 et interdisant toute translation perpendiculaire au troisième axe A3. Le troisième axe A3 est immobile.

Le deuxième vérin 12 a son extrémité de liaison 12A liée à l'arbre 4 par l'intermédiaire du dispositif de liaison 14, et son autre extrémité 12B liée au bâti 30 par l'intermédiaire d'une quatrième liaison 34 autorisant une rotation relative autour d'un quatrième axe A4 parallèle au premier axe A1 et interdisant toute translation perpendiculairement au quatrième axe A4. Le quatrième axe A4 est immobile.

Le premier axe A1, le deuxième axe A2, le troisième axe A3 et le quatrième axe A4 sont distincts et parallèles entre eux.

Dans un mode de réalisation, la troisième liaison 32 et la quatrième liaison 34 sont des liaisons rotules dont les centres se situent respectivement sur le troisième axe A3 et sur le quatrième axe A4.

En variante, la troisième liaison 32 est une liaison linéaire annulaire, dont l'axe de translation est le troisième axe A3, ou une liaison pivot ou une liaison pivot glissant dont l'axe de rotation, et le cas échéant de translation, est le troisième axe A3.

En variante également, la quatrième liaison 34 est une liaison linéaire annulaire, dont l'axe de translation est le quatrième axe A4, ou une liaison pivot ou une liaison pivot glissant dont l'axe de rotation, et le cas échéant de translation, est le quatrième axe A4.

La deuxième portion 4B de l'arbre 4 se déplace au cours du fonctionnement du dispositif de déplacement 8. Le troisième axe A3 et le quatrième axe A4 sont immobiles par rapport au bâti 30. Leurs positions sont invariables au cours du fonctionnement du dispositif de déplacement 8.

Lorsque l'arbre 4 est au repos, l'axe de premier vérin T1 coupe le premier axe A1 et le troisième axe A3, et l'axe de deuxième vérin T2 coupe le deuxième axe A2 et le quatrième axe A4.

Le premier vérin 10 et le deuxième vérin 12 convergent l'un vers l'autre en direction du premier axe A1. La distance entre le premier axe A1 et le deuxième axe A2 est strictement inférieure à la distance entre le troisième axe A3 et le quatrième axe A4.

Les extrémités de liaison 10A, 12A du premier vérin 10 et du deuxième vérin 12 liées au dispositif de liaison 14 sont plus proches l'une de l'autre que les extrémités de liaison 10B, 12B opposées du premier vérin 10 et du deuxième vérin 12 montées à rotation autour respectivement du troisième axe A3 et du quatrième axe A4.

Le premier vérin 10 et le deuxième vérin 12 comprennent chacun un corps de vérin 36 et une tige de vérin 38 coulissant par rapport au corps de vérin 36, respectivement suivant l'axe de premier vérin T1 et l'axe de deuxième vérin T2.

Une extrémité de liaison 10A, 12A de chacun du premier vérin 10 et du deuxième vérin 12 est l'extrémité de la tige de vérin 38 de ce vérin opposée au corps de vérin 36 de ce vérin, l'autre extrémité de liaison 10B, 12B de chacun du premier vérin 10 et du deuxième vérin 12 étant l'extrémité du corps de vérin 36 de ce vérin opposée à la tige de vérin 38.

La tige de vérin 38 de chacun du premier vérin 10 et du deuxième vérin 12 est liée au dispositif de liaison 14 et le corps de vérin 36 de chacun du premier vérin 10 et du deuxième vérin 12 est monté rotatif autour d'un axe fixe A3, A4. En variante, la configuration du premier vérin 10 et/ou la configuration du deuxième vérin 12 est inversée.

Dans un mode de réalisation, le premier vérin 10 et le deuxième vérin 12 sont des vérins hydrauliques. Un vérin hydraulique utilise un liquide sous pression pour déplacer un piston à l'intérieur du corps de vérin, la tige de vérin étant solidaire du piston.

Dans un autre mode de réalisation, le premier vérin 10 et le deuxième vérin 12 sont des vérins électriques. Un vérin électrique utilise par exemple un ensemble vis/écrou et un moteur électrique pour entraîner la vis et l'écrou en rotation l'un par rapport à l'autre et déplacer la tige de vérin en translation par rapport au corps de vérin.

Comme illustré sur les Figures 1 et 2, le dispositif d'immobilisation 6 comprend un support 40 et portant un galet 42 fretté sur une portée de l'arbre 4 destinée à recevoir une roue de véhicule ferroviaire, le galet 42 étant monté fixe sur la support 40. Par « fretté », on entend que le galet 42 est emmanché avec serrage sur la portée de l'arbre 4 destinée à recevoir la roue. Dans une variante possible, le galet 42 est remplacé par une roue. L'utilisation d'un galet 42 ou d'une roue montée sur l'arbre permet de reproduire les conditions d'utilisation de l'arbre 4, notamment avec les contraintes générées à l'interface arbre/roue.

Comme illustré sur les Figures 1 et 2, le bâti 30 se présente ici sous la forme d'une plaque, aussi nommée « marbre ». Le support 40 présente la forme d'un montant s'étendant vers le haut à partir du bâti 30 et portant le galet 42 à son extrémité supérieure. D'autres bâti 30 et d'autres dispositifs d'immobilisation 6 sont envisageables.

Par ailleurs, comme illustré sur les Figures 1 et 2, l'arbre 4 possède ici un diamètre externe trop petit pour coopérer directement avec le dispositif de liaison 14.

L'appareil 2 comprend un adaptateur 44 agrandisseur de diamètre, le dispositif de liaison 14 étant monté sur l'arbre 4 par l'intermédiaire de l'adaptateur 44. L'adaptateur 44 présente un orifice pour recevoir l'arbre 4 et une portée cylindrique pour recevoir le dispositif de liaison 14, la portée possédant un diamètre externe strictement supérieur au diamètre interne de l'orifice.

L'adaptateur 44 se présente ici sous la forme d'un manchon tubulaire enfilé sur l'arbre 4, l'embout 24 du dispositif de liaison 14 étant monté sur l'adaptateur 44.

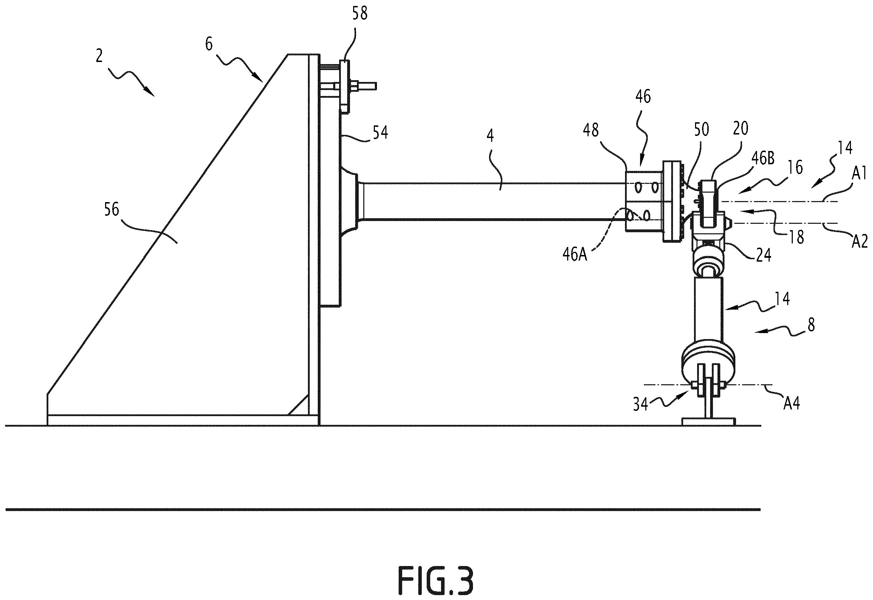

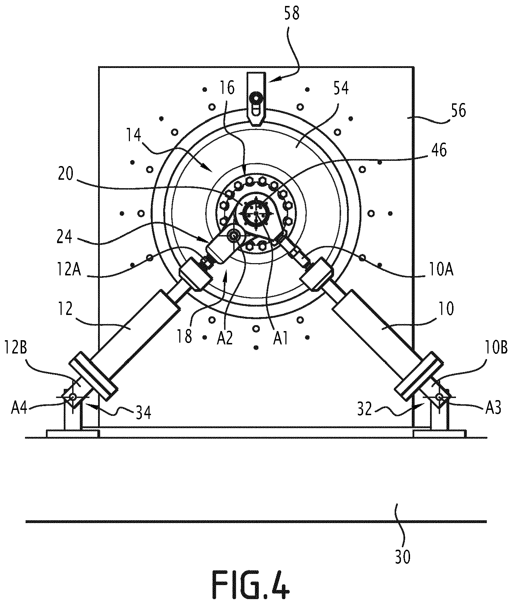

L'appareil 2 illustré sur les Figures 3 et 4 diffère de celui des Figures 1 et 2 en ce qu'il est configuré pour tester en flexion un arbre 4 possédant un diamètre externe trop grand pour coopérer directement avec le dispositif de liaison 14.

L'appareil 2 comprend un adaptateur 46 réducteur de diamètre, le dispositif de liaison 14 étant monté sur l'arbre 4 par l'intermédiaire de l'adaptateur 46. L'adaptateur 46 comprend un orifice 46A pour recevoir l'arbre 4, et une portée 46B cylindrique externe pour recevoir le dispositif de liaison 14, la portée 46B possédant un diamètre externe strictement inférieur au diamètre interne de l'orifice 46.

L'adaptateur 46 comprend ici un manchon 48 tubulaire possédant l'orifice 46A et un téton 50 s'étendant axialement à partir du manchon 48 et muni de la portée 46B.

Par ailleurs, le dispositif d'immobilisation 6 de l'appareil 2 des Figures 3 et 4 diffère de celui des Figures 1 et 2 en ce qu'il est adapté pour immobiliser un arbre 4 d'essieu de bogie de véhicule ferroviaire ayant une roue 54 de véhicule ferroviaire emmanchée avec serrage sur une extrémité de l'arbre 4, plus précisément sur une portée de l'arbre 4 destinée à recevoir une roue.

A cet effet, le dispositif d'immobilisation 6 comprend un support 56 et une pluralité de brides 58 réparties en cercle et prévues pour agripper le bord périphérique de la roue 54. Une seule bride 58 est représentée sur les Figures 3 et 4 pour des raisons de clarté. Les brides 58 sont ici vissées dans des orifices taraudés du support 56.

En vue suivant le premier axe A1 (Figures 2 et 4), l'axe de premier vérin T1 et le segment de droite reliant le premier axe A1 et le deuxième axe A2, forment entre eux un angle compris entre 0 et 180°. De préférence, cet angle est environ égal à 90°.

En vue suivant le premier axe A1 (Figures 2 et 4), le deuxième axe A2 est situé sensiblement entre le premier axe A1 et le quatrième axe A4. Le segment de droite reliant le premier axe A1 et le deuxième axe A2, d'une part, et le segment de droite reliant le deuxième axe A2 et le quatrième axe A4, d'autre part, font entre eux un angle compris entre 90° et 180°, de préférence un angle compris entre 120° et 180°.

En cours de fonctionnement, le premier vérin 10 et le deuxième vérin 12 sont commandés pour déplacer la deuxième portion 4B de l'arbre 4 suivant une trajectoire située dans le plan de déplacement P (parallèle au plan des Figures 2 et 4). Pour réaliser des essais de fatigue en flexion, la trajectoire est par exemple une trajectoire circulaire centrée sur le premier axe A1 selon lequel l'arbre 4 s'étend au repos.

Une procédé de test comprend l'installation de l'arbre 4 sur l'appareil 2, la réalisation d'un relevé de côtes de dispositif de déplacement 8, le calcul de lois de commande du premier vérin 10 et du deuxième vérin 12 en fonction des côtes mesurées et de la trajectoire souhaitée, puis la commande du premier vérin 10 et du deuxième vérin 12 en fonction des lois de commandes, de telle manière à déplacer la deuxième portion 4B de l'arbre 4 selon la trajectoire souhaitée.

L'installation de l'arbre 4 sur l'appareil 2 comprend l'immobilisation de la première portion 4A de l'arbre 4 à l'aide du dispositif d'immobilisation 6 et le montage du dispositif de liaison 14 sur la deuxième portion 4B de l'arbre 4.

Lors d'un test de fatigue en flexion, la trajectoire de la deuxième portion 4B de l'arbre 4 est répétée de manière cyclique, avec un nombre de cycles déterminé. Typiquement, pour un arbre 4 d'essieu de bogie de véhicule ferroviaire, le nombre de cycles est égal ou supérieur à 10⁷.

Les Figures 5 à 8 sont des schémas cinématiques en perspective d'appareils de test d'un arbre en flexion et/ou d'une pièce mécanique montée sur l'arbre.

La Figure 5 représente le schéma cinématique de l'appareil des Figures 1 à 4. La troisième liaison 32 et la quatrième liaison 34 sont chacune une liaison rotule. En variante, la troisième liaison est une liaison pivot autorisant une rotation autour du troisième axe A3 et/ou la quatrième liaison est une liaison pivot autorisant une rotation autour du quatrième axe A4.

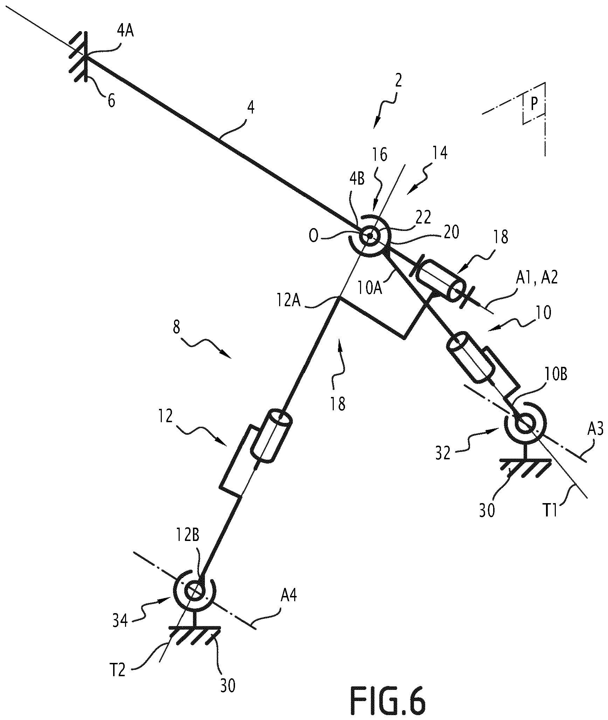

Les Figures 6 à 8 représentent des variantes du mode de réalisation des Figures 1 à 6.

La Figure 6 représente un schéma cinématique d'une variante dans laquelle le deuxième axe A2 est confondu avec le premier axe A1. L'axe de premier vérin T1 et l'axe de deuxième vérin T2 sont ici sensiblement coplanaire. Ils sont au droit l'un de l'autre le long du premier axe A1. En variante, ils sont décalés l'un par rapport à l'autre suivant le premier axe A1.

Le premier axe A1, l'axe de premier vérin T1 et l'axe de deuxième vérin sont ici concourants.

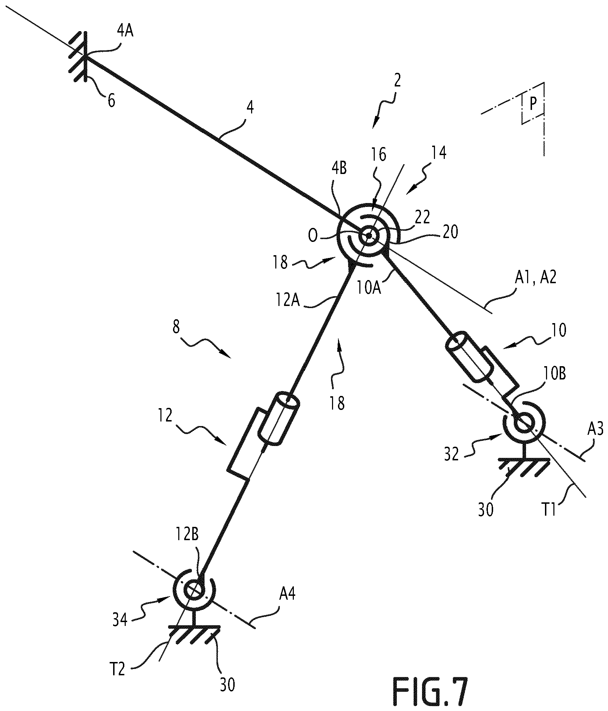

La Figure 7 représente un schéma cinématique d'une variante dans laquelle la deuxième liaison 18 est une liaison rotule entre le deuxième vérin 12 et l'arbre 4.

Dans un mode de réalisation, la première liaison 16 et la deuxième liaison 18 possèdent le même centre de rotation O. Pour ce faire, il est possible de prévoir une seule rotule et deux pièces définissant chacune une partie respective du logement de rotule, les deux pièces liées entre elles par une liaison pivot autorisant une rotation autour du premier axe A1, une pièce étant liée rigidement à l'extrémité 10A du premier vérin 10 et l'autre pièce étant montée rigidement à l'extrémité 12A du deuxième vérin 12.

Le premier axe A1, l'axe de premier vérin T1 et l'axe de deuxième vérin sont ici concourants.

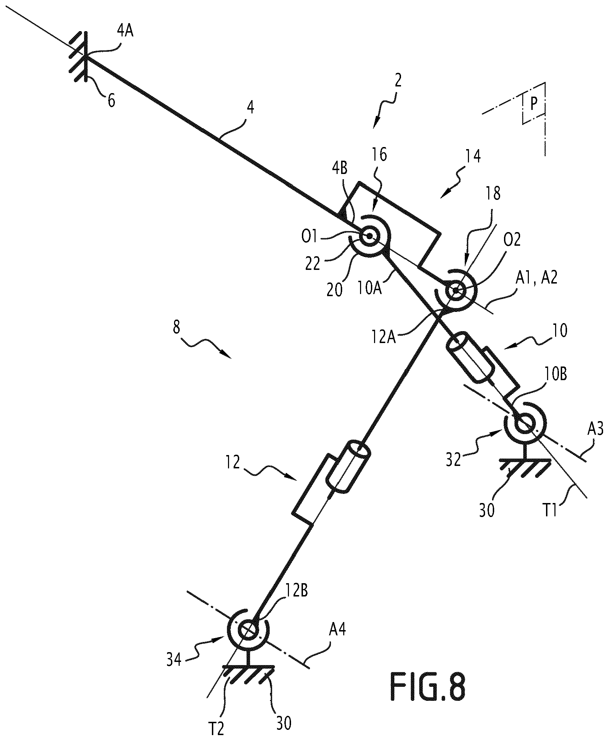

La Figure 8 représente un schéma cinématique d'une variante qui diffère de celle de la Figure 7 en ce que la première liaison 16 et la deuxième liaison 18 possèdent des centres de rotation O1, O2 distincts.

En pratique pour réaliser une telle variante, il est possible que l'extrémité 12A du deuxième vérin 12 soit fixée sur l'arbre 4 de manière analogue à l'extrémité 10A du premier vérin 10, mais avec un décalage le long de l'arbre 4.

Le dispositif de liaison 14 comprend par exemple, pour former la deuxième liaison 18, un embout à rotule similaire au premier embout 20 à rotule de la première liaison des Figures 1 à 4.

Dans un mode de réalisation, l'arbre 4 traverse une rotule de la première liaison 16 et l'extrémité 12A du deuxième vérin 12 est liée au tronçon de l'arbre dépassant de la rotule de la première liaison 16.

L'appareil 2 permet de déplacer l'extrémité de l'arbre selon une trajectoire prédéterminée, de manière contrôlée et fiable. Il est ainsi possible de réaliser des tests, et en particulier des tests de fatigue en flexion, qui sont fiables.

L'appareil 2 est facile à mettre en œuvre. Des relevés de côte pris sur le dispositif de déplacement, une fois l'arbre 4 installé, permettent de calculer facilement les lois de commande du premier vérin et du deuxième vérin pour obtenir la trajectoire souhaitée.

L'utilisation de vérins permet de maîtriser les efforts appliqués sur l'arbre, et ainsi de mieux maîtriser les paramètres du test.

L'utilisation de vérins permet notamment de mettre en œuvre des cycles particuliers reproduisant les conditions d'utilisation réelles d'un essieu ferroviaire.

En effet, en pratique, la sollicitation en flexion de l'essieu varie par exemple selon la charge du véhicule ferroviaire et/ou selon le profil de la voie ferrée (ligne droite, courbe, dévers...). L'utilisation de vérins permet par exemple de simuler des enchaînements particuliers de lignes droites et de courbes.

Dans ce qui précède, on a décrit le test en flexion d'un arbre. Ceci étant, l'appareil 2 permet de tester l'arbre et/ou une pièce mécanique emmanchée sur l'arbre, comme un galet (Figures 1 et 2) ou une roue de véhicule ferroviaire (Figure 3 et 4). Le galet peut par exemple servir à tester un type particulier du moyeu de roue de véhicule ferroviaire, sans tester une roue complète.

Le test d'un galet ou d'une roue par sollicitation en flexion de l'arbre permet de reproduire les conditions de fonctionnement d'un essieu de véhicule ferroviaire, et notamment l'interaction entre l'arbre et le galet ou la roue emmanché sur l'arbre.

L'invention n'est pas limitée aux modes de réalisation et variantes décrits ci-dessus. D'autres modes de réalisation et d'autres variantes sont envisageables.

Par exemple, sur les Figures 1 à 8, le premier axe A1 est horizontal et le plan de déplacement est vertical. En variante, le premier axe A1 est vertical et le plan de déplacement est horizontal.

## Revendications

1. Appareil pour tester un arbre (4) et/ou une pièce mécanique montée sur l'arbre, l'appareil comprenant un dispositif d'immobilisation pour immobiliser une première portion (4A) de l'arbre, l'arbre (4) immobilisé et au repos s'étendant suivant un premier axe (A1), et un dispositif de déplacement pour déplacer une deuxième portion (4B) de l'arbre sensiblement perpendiculairement au premier axe (A1), de manière à solliciter l'arbre (4) en flexion,
dans lequel le dispositif de déplacement comprend un premier vérin (10) agencé suivant un premier axe de vérin (T1) sensiblement perpendiculaire au premier axe (A1), un deuxième vérin (12) agencé suivant un deuxième axe de vérin (T2) sensiblement perpendiculaire au premier axe, et un dispositif de liaison (14) pour lier le premier vérin (10) et le deuxième vérin (12) à l'arbre (4),
**caractérisé en ce que** le dispositif de liaison (14) est configuré pour réaliser, entre l'arbre (4) et une extrémité du premier vérin (10), une première liaison (16) interdisant une translation relative perpendiculairement au premier axe (A1) et autorisant une rotation relative autour du premier axe (A1), la première liaison (16) étant une liaison rotule dont le centre de rotation est situé sur le premier axe (A1), une liaison linéaire annulaire dont l'axe de translation est le premier axe (A1) et le centre de rotation est situé sur le premier axe (A1), une liaison pivot dont l'axe de rotation est le premier axe (A1) ou une liaison pivot glissant, dont l'axe de rotation et de translation est le premier axe (A1), et pour réaliser, entre l'arbre (4) et une extrémité du deuxième vérin (12) ou entre l'extrémité du premier vérin (10) liée à l'arbre (4) et une extrémité du deuxième vérin (12), une deuxième liaison (18) interdisant une translation relative perpendiculairement au premier axe (A1) et autorisant une rotation relative autour d'un deuxième axe (A2) parallèle au premier axe (A1).

2. Appareil selon la revendication 1, dans lequel la première liaison (16) comprend un embout liée rigidement à une extrémité du premier vérin (10), l'embout définissant un logement de rotule recevant une rotule destinée à être montée sur l'arbre (4) en étant centrée sur le premier axe (A1).

3. Appareil selon l'une quelconque de revendications précédentes, dans lequel le deuxième axe (A2) est distinct du premier axe (A1).

4. Appareil selon l'une quelconque de revendications 1 à 2, dans lequel le deuxième axe (A2) coïncide avec le premier axe (A1).

5. Appareil selon l'une quelconque de revendications précédentes, dans lequel la deuxième liaison (18) est une liaison pivot dont l'axe de rotation est le deuxième axe (A2).

6. Appareil selon l'une quelconque de revendications 1 à 4, dans lequel la deuxième liaison (18) est une liaison rotule ou une liaison linéaire annulaire.

7. Appareil selon l'une quelconque des revendications précédentes, dans lequel, l'arbre (4) étant au repos, le premier axe de vérin (T1) coupe le premier axe (A1) et/ou le deuxième axe de vérin (T2) coupe le premier axe (A1).

8. Appareil selon l'une quelconque des revendications précédentes, comprenant au moins un adaptateur (46) comprenant un orifice pour recevoir la deuxième portion (4B) de l'arbre (4) et une portée cylindrique pour le montage du dispositif de liaison (14), la portée cylindrique présentant un diamètre externe strictement supérieur ou strictement inférieur au diamètre interne de l'orifice.

9. Appareil selon l'une quelconque des revendications précédentes, dans lequel le dispositif d'immobilisation est configuré pour immobiliser une pièce mécanique montée sur la première portion (4A) de l'arbre, notamment un galet ou une roue de véhicule ferroviaire emmanchée sur le première portion (4A).

10. Utilisation d'un appareil, **caractérisé en ce que** l'appareil est selon l'une quelconque des revendications précédentes pour tester en flexion un arbre (4), en particulier un arbre d'essieu de bogie de véhicule ferroviaire et/ou tester une pièce mécanique montée sur l'arbre, en particulier un galet ou une roue emmanchée sur l'arbre.

11. Utilisation selon la revendication 10, comprenant :
- l'installation de l'arbre (4) sur l'appareil,
- le relevé de côtes du dispositif de déplacement, l'arbre (4) étant au repos,
- le calcul de lois de commande du premier vérin (10) et du deuxième vérin (12) en fonction des côtes relevées et d'une trajectoire souhaitée de la deuxième portion (4B) de l'arbre, et
- la commande du premier vérin et du deuxième vérin en fonction des lois de commandes calculées.

## Patentansprüche

1. Gerät zum Testen einer Welle (4) und/oder eines mechanischen Teils, das auf der Welle montiert ist, wobei das Gerät eine Festlegungsvorrichtung zum Festlegen eines ersten Abschnitts (4A) der Welle, wobei die festgelegte Welle (4) im Ruhezustand sich gemäß einer ersten Achse (A1) erstreckt, und eine Bewegungsvorrichtung zum Bewegen eines zweiten Abschnitts (4B) der Welle im Wesentlichen senkrecht zur ersten Achse (A1) umfasst, um die Welle (4) einer Biegebeanspruchung auszusetzen,
bei dem die Bewegungsvorrichtung einen ersten Stellantrieb (10), der gemäß einer ersten Stellantriebsachse (T1) im Wesentlichen senkrecht zu ersten Achse (A 1) angeordnet ist, einen zweiten Stellantriebe (12), der gemäß einer zweiten Stellantriebsachse (T2) im Wesentlichen senkrecht zur ersten Achse angeordnet ist, und eine Verbindungsvorrichtung (14) zum Verbinden des ersten Stellantriebs (10) und des zweiten Stellantriebs (12) mit der Welle (4) umfasst,
**dadurch gekennzeichnet, dass** die Verbindungsvorrichtung (14) ausgebildet ist, zwischen der Welle (4) und einem Ende des ersten Stellantriebs (10) eine erste Verbindung (16) herzustellen, die eine relative Längsbewegung senkrecht zu ersten Achse (A1) verbietet und eine relative Drehung um die erste Achse (A1) zulässt, wobei die erste Verbindung (16) eine Kugelgelenkverbindung, deren Drehzentrum auf der ersten Achse (A1) liegt, eine ringförmige lineare Verbindung, deren Linearachse die erste Achse (A1) ist und das Drehzentrum auf der ersten Achse (A1) liegt, eine Schwenkverbindung, deren Drehachse die erste Achse (A1) ist oder eine gleitende Schwenkverbindung, deren Drehachse und Längsachse die erste Achse (A1) ist, umfasst, und um zwischen der Welle (4) und einem Ende der zweiten Stellantriebs (12) oder zwischen dem Ende des mit der Welle (4) verbundenen ersten Stellantriebs (10) und einem Ende des zweiten Stellantriebs (12) eine zweite Verbindung (18) herzustellen, die eine relative Längsbewegung senkrecht zur ersten Achse (A1) verbietet und eine relative Drehung um eine zweite Achse (A2), parallel zu ersten Achse (A1) zulässt.

2. Gerät nach Anspruch 1, bei dem die erste Verbindung (16) einen Ansatz umfasst, der starr mit einem Ende des ersten Stellantriebs (10) verbunden ist, wobei der Ansatz eine Kugelgelenkaufnahme definiert, die ein Kugelgelenk aufnimmt, das vorgesehen ist, an der Welle (4) montiert zu werden, wobei es auf die erste Achse (A1) zentriert ist.

3. Gerät nach einem beliebigen der vorhergehenden Ansprüche, bei dem die zweite Achse (A2) getrennt von der ersten Achse (A1) ist.

4. Gerät nach einem beliebigen der Ansprüche 1 bis 2, bei dem die zweite Achse (A2) mit der ersten Achse (A1) übereinstimmt.

5. Gerät nach einem beliebigen der vorhergehenden Ansprüche, bei dem die zweite Verbindung (18) eine Schwenkverbindung ist, deren Drehachse die zweite Achse (A2) ist

6. Gerät nach einem beliebigen der Ansprüche 1 bis 4, bei dem die zweite Verbindung (18) eine Kugelgelenkverbindung oder eine ringförmige lineare Verbindung ist.

7. Gerät nach einem beliebigen der vorhergehenden Ansprüche, bei dem in der Ruhestellung der Welle (4) die erste Stellantriebsachse (T1) die erste Achse (A1) schneidet und/oder die zweite Stellantriebsachse (T2) die erste Achse (A1) schneidet.

8. Gerät nach einem beliebigen der vorhergehenden Ansprüche, mindestens einen Adapter (46) umfassend, der eine Öffnung zur Aufnahme des zweiten Abschnitts (4B) der Welle (4) und eine zylindrische Auflagefläche für die Montage der Verbindungsvorrichtung (14) umfasst, wobei die zylindrische Auflagefläche einen Außendurchmesser streng größer oder streng kleiner als der Innendurchmesser der Öffnung aufweist.

9. Gerät nach einem beliebigen der vorhergehenden Ansprüche, bei dem die Festlegungsvorrichtung ausgebildet ist, ein mechanisches Teil, das an dem ersten Abschnitt (4A) der Welle montiert ist, insbesondere eine Rolle oder ein Rad eines Schienenfahrzeugs, das auf den ersten Abschnitt (4A) aufgesteckt ist, festzulegen.

10. Verwendung eines Gerätes, **dadurch gekennzeichnet, dass** das Gerät nach einem beliebigen der vorhergehenden Ansprüche ausgebildet ist, um eine Welle (4) hinsichtlich der Biegung zu testen, insbesondere eine Achswelle eines Drehgestells eines Schienenfahrzeugs, und/oder ein auf die Welle montiertes mechanisches Teil, insbesondere eine Rolle oder ein auf die Welle aufgestecktes Rad, zu testen.

11. Verwendung nach Anspruch 10, umfassend:
- Installation der Welle (4) auf dem Gerät,
- Aufmessung der Bewegungsvorrichtung, wobei die Welle (4) in der Ruhestellung ist,
- Berechnung der Steuergesetze der ersten Stellvorrichtung (10) und der zweiten Stellvorrichtung (12) abhängig von den Aufmessungen und einer gewünschten Bahn des zweiten Teils (4B) der Welle und
- Steuerung der ersten Stellvorrichtung und der zweiten Stellvorrichtung abhängig von den berechneten Steuergesetzen.

## Claims

1. A device for testing a shaft (4) and/or a mechanical part mounted on the shaft, the device comprising an immobilizing device to immobilize a first portion (4A) of the shaft, the immobilized and idle shaft (4) extending along a first axis (A1), and a movement device for moving a second portion (4B) of the shaft substantially perpendicular to the first axis (A1), so as to load the shaft (4) in bending,
**characterized in that** the moving device comprises a first cylinder (10) arranged along a first cylinder axis (T1) substantially perpendicular to the first axis (A1), the first connection (16) being a ball joint or an annular linear connection, the center of rotation of which is located on the first axis (A1); an annular linear connection, the center of translation of which is the first axis (A1) and the center of rotation of which is located on the first axis (A1); a pivot link, the axis of rotation of which is the first axis (A1) or a sliding pivot link, the axis of rotation and translation of which is the first axis (A1), a second cylinder (12) arranged along a second cylinder axis (T2) substantially perpendicular to the first axis, and a connecting device (14) for connecting the first cylinder (10) and the second cylinder (12) to the shaft (4),
wherein the connecting device (14) is configured to form, between the shaft (4) and one end of the first cylinder (10), a first connection (16) prohibiting a relative translation perpendicular to the first axis (A1) and allowing a relative rotation around the first axis (A1), and to form, between the shaft (4) and one end of the second cylinder (12) or between the end of the first cylinder (10) connected to the shaft (4) and one end of the second cylinder (12), a second connection (18) prohibiting a relative translation perpendicular to the first axis (A1) and allowing a relative rotation around a second axis (A2) parallel to the first axis (A1).

2. The device according to claim 1, wherein the first connection (16) comprises an end-piece rigidly connected to one end of the first cylinder (10), the end-piece defining a ball joint housing receiving a ball intended to be mounted on the shaft (4) while being centered on the first axis (A1).

3. The device according to any one of the preceding claims, wherein the second axis (A2) is separate from the first axis (A1).

4. The device according to any one of claims 1 to 2, wherein the second axis (A2) coincides with the first axis (A1).

5. The device according to any one of the preceding claims, wherein the second connection (18) is a pivot link, the axis of rotation of which is the second axis (A2).

6. The device according to any one of claims 1 to 4, wherein the second connection (18) is a ball joint or an annular linear connection.

7. The device according to any one of the preceding claims, wherein, the shaft (4) being idle, the first cylinder axis (T1) intersects the first axis (A1) and/or the second cylinder axis (T2) intersects the first axis (A1).

8. The device according to any one of the preceding claims, comprising at least one adapter (46) comprising an orifice to receive the second portion (4B) of the shaft (4) and a cylindrical step for mounting the connecting device (14), the cylindrical step having an outer diameter strictly larger or strictly smaller than the inner diameter of the orifice.

9. The device according to any one of the preceding claims, wherein the immobilizing device is configured to immobilize the mechanical part mounted on the first portion (4A) of the shaft, in particular a pebble or a railway vehicle wheel fitted on the first portion (4A).

10. A use of a device **characterized in that** the apparatus is according to any one of the preceding claims to test the bending of a shaft (4), in particular a railway vehicle bogie axle shaft, and/or to test a mechanical part mounted on the shaft, in particular a pebble or a wheel fitted on the shaft.

11. The use according to claim 9, comprising:
- installing the shaft (4) on the device,
- reading dimensions of the movement device, the shaft (4) being idle,
- calculating control laws of the first cylinder (10) and the second cylinder (12) based on the read dimensions and a desired trajectory of the second portion (4B) of the shaft, and
- controlling the first cylinder and the second cylinder based on the calculated control laws.
